# EUROPÄISCHE PATENTANMELDUNG

(11) **EP 1 903 764 A1**
(43) Veröffentlichungstag der Anmeldung: **26.03.2008**
(21) Anmeldenummer: 06076771.2
(22) Anmeldetag: 22.09.2006
(51) Int. Cl.: H04M 15/10, H04L 12/56, H04L 12/14

(54) **Verfahren zum Signalisieren der Gesamtkosten einer MANET Verbindung**

(71) Anmelder: Nokia Siemens Networks GmbH & Co. KG, 81541 München (DE)
(72) Erfinder: Schläger, Morten, 14050 Berlin (DE); Pittmann, Frank, 12099 Berlin (DE); Kühne, Ralph, 71679 Asperg (DE)

(57) **Zusammenfassung**

Die Erfindung betrifft ein Verfahren zum Bereitstellen einer Kommunikationsverbindung zwischen einem Kommunikationsendgerät (KEG) und einem Kommunikationssystems (KS1) über einen Kommunikationspfad, der über zumindest ein weiteres Kommunikationsendgerät (KEG1, KEG2, KEGn) verläuft, mit den folgenden Schritten:
- Senden einer Verbindungsanfrage (CNR) über den Kommunikationspfad an das Kommunikationssystem (KS1) durch das Kommunikationsendgerät (KEG),
- Erzeugen eines Kosten-Signals bezüglich der seitens des Netzbetreibers des Kommunikationssystems (KS1) für das Bereitstellen der Kommunikationsverbindung mit dem Kommunikationsendgerät (KEG) anfallenden Gebühren und Beantworten der Verbindungsanfrage (CNR) durch Senden einer das Kosten-Signal enthaltenden Antwortnachricht (CNA) über den Kommunikationspfad an das Kommunikationsendgerät (KEG) durch das Kommunikationssystem (KS1),
- Erzeugen eines Zusatz-Kosten-Signals und Hinzufügen des Zusatz-Kosten-Signals zu der Antwortnachricht (CNA) durch das weitere Kommunikationsendgerät oder jeweils durch die weiteren Kommunikationsendgeräte (KEG1, KEG2, KEGn) auf dem Kommunikationspfad, wobei das Zusatz-Kosten-Signal eine Angabe zu den Gebühren enthält, die das jeweilige Kommunikationsendgerät (KEG1, KEG2, KEGn) für seinen Anteil an der Bereitstellung der Kommunikationsverbindung fordert, und
- Empfangen der Antwortnachricht (CNA) sowie Senden einer Bestätigungsnachricht (CNC) an das Kommunikationssystem (KS1) über den Kommunikationspfad durch das Kommunikationsendgerät (KEG), sofern die sich aus dem Kosten-Signal sowie dem zumindest einen Zusatz-Kosten-Signal ergebenden Gesamtgebühren seitens des Kommunikationsendgerätes (KEG) akzeptiert werden, woraufhin die Kommunikationsverbindung zwischen dem Kommunikationsendgerät (KEG) und dem Kommunikationssystem (KS1) über den Kommunikationspfad bereitgestellt wird.

## Beschreibung

Befindet sich ein Kommunikationsendgerät selbst nicht in der Reichweite eines Kommunikationssystems oder verfügt es selbst nicht über eine für den Zugang zu dem Kommunikationssystem geeignete Kommunikationsschnittstelle, so ist ihm der Zugang zu dem Kommunikationssystem zunächst verwehrt. Sofern sich das Kommunikationsendgerät jedoch in der Reichweite zumindest eines weiteren Kommunikationsendgerätes befindet, und beide Kommunikationsendgeräte über eine Kommunikationsschnittstelle verfügen, die ihnen den Aufbau einer Kommunikationsverbindung miteinander ermöglicht, so besteht die Möglichkeit, dass das weitere Kommunikationsendgerät für das Kommunikationsendgerät eine Erweiterung der Netzabdeckung des Kommunikationssystems bereitstellt. Dies setzt allerdings voraus, dass sich das weitere Kommunikationsendgerät selbst in einem durch das Kommunikationssystem abgedeckten Bereich aufhält.

Sofern es sich bei dem Kommunikationssystem beispielsweise um ein Mobilfunknetz etwa nach dem UMTS (Universal Mobile Telecommuniation System)-Standard handelt, so besteht beispielsweise die Möglichkeit, dass das Kommunikationsendgerät über eine WLAN (Wireless Local Area Network)-Kommunikationsschnittstelle eine Kommunikationsverbindung zu einem benachbarten weiteren Kommunikationsendgerät aufbaut, das sowohl über eine WLAN- als auch über eine UMTS-Kommunikationsschnittstelle verfügt. Sofern sich das weitere Kommunikationsendgerät selbst innerhalb des durch das Kommunikationssystem in Form des Mobilfunknetzes abgedeckten räumlichen Bereiches, d.h. beispielsweise innerhalb der Reichweite einer Basisstation in Form eines so genannten Node-B befindet, so kann dieses weitere Kommunikationsendgerät dem Kommunikationsendgerät eine Kommunikationsverbindung mit dem Kommunikationssystem ermöglichen.

Darüber hinaus besteht auch die Möglichkeit, dass sich auch das weitere Kommunikationsendgerät selbst nicht in der Reichweite des Kommunikationssystems befindet, aber mit zumindest einem anderen weiteren Kommunikationsendgerät eine Verbindung aufbauen kann. Dies führt dazu, dass dem Kommunikationsendgerät gegebenenfalls auch unter Zwischenschaltung mehrerer weiterer Kommunikationsendgeräte eine Kommunikationsverbindung zu dem Kommunikationssystem ermöglicht werden kann.

Entsprechende Verfahren, die den Abdeckungsbereich eines Kommunikationssystems unter Verwendung von Kommunikationspfaden, die über zumindest ein weiteres Kommunikationsendgerät verlaufen, erweitern, werden derzeit unter den Begriffen "Ad-Hoc-Netzwerke" und "mobile Ad-Hoc-Netzwerke" (MANet) intensiv diskutiert. Sofern das Weiterleiten von Daten in das Kommunikationssystem dabei über mehrere Zwischenstationen beziehungsweise Zwischenschritte (so genannte "Hops") erfolgt, wird von einer "Multi-Hop" Erweiterung der Netzabdeckung gesprochen, die auch als "Multi-Hop Coverage Extension" bezeichnet wird.

Ein wichtiger Punkt bei solchen Verfahren besteht in der so genannten Routing-Problematik, d.h. im Auffinden eines möglichen Kommunikationspfades vom Sender zum Empfänger, d.h. von dem Kommunikationsendgerät zu dem Kommunikationssystem. Entsprechende für diesen Zweck vorgesehene Algorithmen, die auch als "Routing-Protokolle" bezeichnet werden, sind in einer Vielzahl bekannt und bedienen sich unterschiedlichster Ansätze zum Auffinden eines Kommunikationspfades von dem Kommunikationsendgerät über zumindest ein weiteres Kommunikationsendgerät zu dem Kommunikationssystem. Bezüglich des diesbezüglichen Standes der Technik sei beispielhaft auf das Dokument "On the Evaluation and Classification of Routing Protocols for Mobile Ad Hoc Networks", Daniel Lang, Dissertation, Lehrstuhl für Netzwerkarchitekturen, Telematik, Telekooperation, Technische Universität München, 2006 verwiesen.

Ein grundsätzliches Problem beim Bereitstellen einer Kommunikationsverbindung zwischen einem Kommunikationsendgerät und einem Kommunikationssystem über einen Kommunikationspfad, der über zumindest ein weiteres Kommunikationsendgerät verläuft, stellt die Vergebührung einer solchen Kommunikationsverbindung dar. Die Vergebührung ist in einem solchen Fall technisch grundsätzlich schwierig, da hierbei sowohl die Belange des Kommunikationsendgerätes, für das die Kommunikationsverbindung bereitgestellt werden soll, als auch die Belange der weiteren Kommunikationsendgeräte, die an der Bereitstellung der Kommunikationsverbindung beteiligt sind und des Betreibers des Kommunikationssystems, zu dem die Kommunikationsverbindung aufgebaut wird, zu berücksichtigen sind.

Der vorliegenden Erfindung liegt die Aufgabe zugrunde, ein Verfahren zum Bereitstellen einer Kommunikationsverbindung zwischen einem Kommunikationsendgerät und einem Kommunikationssystem über einen Kommunikationspfad, der über zumindest ein weiteres Kommunikationsendgerät verläuft, anzugeben, das zwischen den beteiligten Komponenten eine effiziente und gleichzeitig transparente Vereinbarung der Kosten für das Bereitstellen der Kommunikationsverbindung ermöglicht.

Diese Aufgabe wird erfindungsgemäß gelöst durch ein Verfahren zum Bereitstellen einer Kommunikationsverbindung zwischen einem Kommunikationsendgerät und einem Kommunikationssystem über einen Kommunikationspfad, der über zumindest ein weiteres Kommunikationsendgerät verläuft, mit den folgenden Schritten:
- Senden einer Verbindungsanfrage über den Kommunikationspfad an das Kommunikationssystem durch das Kommunikationsendgerät,
- Erzeugen eines Kosten-Signals bezüglich der seitens des Netzbetreibers des Kommunikationssystems für das Bereitstellen der Kommunikationsverbindung mit dem Kommunikationsendgerät anfallenden Gebühren und Beantworten der Verbindungsanfrage durch Senden einer das Kosten-Signal enthaltenden Antwortnachricht über den Kommunikationspfad an das Kommunikationsendgerät durch das Kommunikationssystem,
- Erzeugen eines Zusatz-Kosten-Signals und Hinzufügen des Zusatz-Kosten-Signals zu der Antwortnachricht durch das weitere Kommunikationsendgerät oder jeweils durch die weiteren Kommunikationsendgeräte auf dem Kommunikationspfad, wobei das Zusatz-Kosten-Signal eine Angabe zu den Gebühren enthält, die das jeweilige Kommunikationsendgerät für seinen Anteil an der Bereitstellung der Kommunikationsverbindung fordert, und
- Empfangen der Antwortnachricht sowie Senden einer Bestätigungsnachricht an das Kommunikationssystem über den Kommunikationspfad durch das Kommunikationsendgerät, sofern die sich aus dem Kosten-Signal sowie dem zumindest einen Zusatz-Kosten-Signal ergebenden Gesamtgebühren seitens des Kommunikationsendgerätes akzeptiert werden, woraufhin die Kommunikationsverbindung zwischen dem Kommunikationsendgerät und dem Kommunikationssystem über den Kommunikationspfad bereitgestellt wird.

Das erfindungsgemäße Verfahren ist vorteilhaft, da es dem Kommunikationsendgerät vor der eigentlichen Bereitstellung der Kommunikationsverbindung eine Information über die sich aus der Nutzung der Kommunikationsverbindung ergebenden Gesamtgebühren ermöglicht. Basierend auf dieser Information kann seitens des Kommunikationsendgerätes entschieden werden, ob diese Gesamtgebühren akzeptiert werden oder nicht. Sofern das Kommunikationsendgerät die Gesamtgebühren durch das Senden einer Bestätigungsnachricht an das Kommunikationssystem akzeptiert, wird die Kommunikationsverbindung zwischen dem Kommunikationsendgerät und dem Kommunikationssystem über den Kommunikationspfad dauerhaft bereitgestellt. Dabei kann die Entscheidung selbst auf vielfältige Art und Weise getroffen werden. So kann die Bestätigungsnachricht beispielsweise manuell durch eine entsprechende Eingabe, z.B. das Drücken einer bestimmten Taste oder Tastenkombination, durch einen Nutzer des Kommunikationsendgerätes erzeugt werden. Darüber hinaus besteht weiterhin auch die Möglichkeit, dass die Bestätigungsnachricht eigenständig durch das Kommunikationsendgerät erzeugt wird. Dies kann beispielsweise anhand nutzerdefinierter Regeln oder unter Verwendung eines "intelligenten Agenten" geschehen.

Sofern sich das Kommunikationsendgerät beziehungsweise dessen Nutzer gegen eine Nutzung der Kommunikationsverbindung entscheidet, sendet das Kommunikationsendgerät eine entsprechende Ablehnungsnachricht an das Kommunikationssystem. Nach Empfang der Ablehnungsnachricht durch das Kommunikationssystem wird die Kommunikationsverbindung zwischen dem Kommunikationsendgerät und dem Kommunikationssystem nicht bereitgestellt beziehungsweise wieder abgebaut.

Das erfindungsgemäße Verfahren bietet weiterhin den Vorteil, dass alle an der Bereitstellung der Kommunikationsverbindung beteiligten Komponenten, d.h. das zumindest eine weitere Kommunikationsendgerät und das Kommunikationssystem, die Möglichkeit haben, ihre Gebührenforderung für das Bereitstellen der Kommunikationsverbindung unabhängig voneinander festzulegen. Dies hat aus Sicht des Betreibers des Kommunikationssystems insbesondere den Vorteil, dass das erfindungsgemäße Verfahren unabhängig von der Anzahl der weiteren Kommunikationsendgeräte, die an der Bereitstellung der Kommunikationsverbindung beteiligt sind, profitabel ist. Darüber hinaus können die weiteren Kommunikationsendgeräte vorteilhafterweise jeweils ihre tatsächlichen Kosten bei der Festlegung der Gebühren, die das jeweilige Kommunikationsendgerät für seinen Anteil an der Bereitstellung der Kommunikationsverbindung fordert, berücksichtigen. Dabei ist zu bedenken, dass sich die weiteren Kommunikationsendgeräte in der Regel nur dann an der Bereitstellung der Kommunikationsverbindung beteiligen werden, wenn dies für sie ebenfalls lohnend ist, d.h. wenn die in dem jeweiligen Zusatz-Kosten-Signal angegebenen Gebühren über den Kosten liegen, die dem jeweiligen weiteren Kommunikationsendgerät durch die Weiterleitung der Daten beziehungsweise das Bereitstellen der Kommunikationsverbindung entstehen.

Des Weiteren bietet das erfindungsgemäße Verfahren den Vorteil, dass das Kommunikationsendgerät eine Kommunikationsverbindung über das zumindest eine weitere Kommunikationsendgerät nutzen kann, ohne hierfür zuvor selbst auf entsprechende Weise bei der Bereitstellung einer Kommunikationsverbindung beteiligt gewesen zu sein müssen. Dies ist insbesondere für solche Kommunikationsendgeräte vorteilhaft, die sich regelmäßig außerhalb der Netzabdeckung des Kommunikationssystems aufhalten.

Im Rahmen des erfindungsgemäßen Verfahrens ist eine Abrechnung der Gebühren vorteilhafterweise über ein beliebiges Abrechnungsverfahren möglich. Dies schließt sowohl so genannte Prepaid-Verfahren ein, bei denen vorausbezahlte Guthaben genutzt werden, als auch so genannte Postpaid-Verfahren, bei denen eine zeitlich nachgeordnete Vergebührung erfolgt.

Bei den im Rahmen des erfindungsgemäßen Verfahrens verwendeten Kommunikationsendgeräten kann es sich um beliebige Arten von Kommunikationsendgeräten handeln. Vorzugsweise handelt es sich bei dem Kommunikationsendgerät und/oder dem weiteren Kommunikationsendgerät beziehungsweise den weiteren Kommunikationsendgeräten um mobile Kommunikationsendgeräte etwa in Form von Mobilfunktelefonen oder mit einer Funkschnittstelle versehenen mobilen Computern. Darüber hinaus können aber beispielsweise auch Kommunikationsendgeräte in Form von beispielsweise in Fahrzeugen integrierten Funkmodulen zum Einsatz kommen.

Kommt es aufgrund von Mobilität des Kommunikationsendgerätes beziehungsweise der weiteren Kommunikationsendgeräte zu Änderungen in dem Kommunikationspfad, so kann das erfindungsgemäße Verfahren erneut durchlaufen werden. Sofern die Gesamtkosten des neuen Kommunikationspfades für das Kommunikationsendgerät nicht oberhalb denjenigen des vorherigen Kommunikationspfades liegen, so ist jedoch ein erneutes Durchlaufen des erfindungsgemäßen Verfahrens nicht zwingend erforderlich. Alternativ hierzu besteht beispielsweise auch die Möglichkeit, dass seitens des Kommunikationssystems lediglich die Forderungen der neu hinzugekommenen weiteren Kommunikationsendgeräte erfasst und entsprechend in die Kostenberechnung und Kostenbegleichung mit einbezogen werden, wobei gleichzeitig die Forderungen der aus dem Kommunikationspfad weggefallenen weiteren Kommunikationsendgeräte nicht weiter berücksichtigt werden.

Bei der bereitgestellten Kommunikationsverbindung handelt es sich vorzugsweise um eine paketorientierte Kommunikationsverbindung, beispielsweise unter Verwendung des Internet Protokolls (IP).

In einer bevorzugten Weiterbildung läuft das erfindungsgemäße Verfahren so ab, dass das Kosten-Signal und/oder das jeweilige Zusatz-Kosten-Signal durch das Kommunikationssystem bzw. das jeweilige weitere Kommunikationsendgerät derart verschlüsselt wird bzw. werden, dass das jeweilige Signal ausschließlich für das Kommunikationsendgerät lesbar ist. Dies kann beispielsweise dadurch geschehen, dass eine Verschlüsselung unter Verwendung eines öffentlichen Schlüssels des Kommunikationsendgerätes beziehungsweise dessen Nutzers erfolgt. Eine entsprechende Verschlüsselung bietet generell den Vorteil, dass die jeweilige Forderung für die an der Bereitstellung der Kommunikationsverbindung beteiligten weiteren Kommunikationsendgeräte bzw. die jeweils anderen weiteren Kommunikationsendgeräte nicht lesbar ist. Die Schlüsselbereitstellung und die Sicherstellung der Authentizität der Schlüssel kann beispielsweise über eine so genannte "Public Key"-Infrastruktur gewährleistet werden. Entsprechende Anordnungen und Verfahren zur Verschlüsselung sind dem Fachmann bekannt und werden im Rahmen der Ausführungen zu den entsprechenden Weiterbildungen des erfindungsgemäßen Verfahrens nicht weiter beschrieben, da die betreffenden Weiterbildungen von der genauen Art des für die Verschlüsselung verwendeten Verfahrens unabhängig sind.

Vorzugsweise kann das erfindungsgemäße Verfahren auch so ablaufen, dass das Kosten-Signal und/oder das jeweilige Zusatz-Kosten-Signal der Antwortnachricht in Form eines die jeweilige Gebühr beschreibenden mathematischen Ausdruckes hinzugefügt wird bzw. werden. Diese Ausführungsform des erfindungsgemäßen Verfahrens ist vorteilhaft, da sie die Vertraulichkeit der verschlüsselten Signale erhöht. Bei einer Angabe der Forderung als einfache Zahl könnte die Möglichkeit so genannter "Brute-Force-Angriffe" bestehen, bei denen ein weiteres Kommunikationsendgerät alle sinnvollen Forderungen relativ einfach ausprobieren könnte. Ursache hierfür ist, dass das weitere Kommunikationsendgerät selbst über den verwendeten Schlüssel und den in der Antwortnachricht enthaltenen, dem betreffenden Signal zugeordneten Geheimtext verfügt. Diese Informationen könnten somit zur Durchführung einer so genannte "Chosen-Plaintext-Attacke" verwendet werden. Dies wird vorteilhafterweise dadurch verhindert, dass das Kosten-Signal und/oder das jeweilige Kosten-Signal der Antwortnachricht in Form eines die jeweilige Gebühr beschreibenden mathematischen Ausdrucks hinzugefügt wird bzw. werden.

Vorzugsweise kann das erfindungsgemäße Verfahren auch so ausgestaltet sein, dass das Kommunikationsendgerät das mit der Antwortnachricht empfangene Zusatz-Kosten-Signal oder die mit der Antwortnachricht empfangenen Zusatz-Kosten-Signale der Bestätigungsnachricht hinzufügt. Hierdurch wird vorteilhafterweise Betrugsversuchen vorgebeugt, da das Kommunikationssystem auf diese Weise von dem Kommunikationsendgerät alle mit der Antwortnachricht empfangenen Zusatzkosten-Signale bestätigt bekommt.

In einer weiteren bevorzugten Ausführungsform ist das erfindungsgemäße Verfahren derart ausgestaltet, dass das Kommunikationsendgerät das Zusatz-Kosten-Signal oder die Zusatz-Kosten-Signale vor dem Hinzufügen derart verschlüsselt, dass eine Lesbarkeit ausschließlich für das Kommunikationssystem gegeben ist. Dies bietet den Vorteil, dass verhindert wird, dass die weiteren Kommunikationsendgeräte die von jeweils anderen weiteren Kommunikationsendgeräten für ihren Beitrag zum Bereitstellen der Kommunikationsverbindung erhobenen Gebühren lesen können.

Vorteilhafterweise kann das erfindungsgemäße Verfahren auch so ablaufen, dass das Kommunikationsendgerät das von ihm der Bestätigungsnachricht hinzugefügte Zusatz-Kosten-Signal oder die von ihm der Bestätigungsnachricht hinzugefügten Zusatz-Kosten-Signale elektronisch signiert. Hierdurch wird vorteilhafterweise sichergestellt, dass die in der Bestätigungsnachricht enthaltenen Kosten-Signale tatsächlich von dem Kommunikationsendgerät hinzugefügt worden sind, d.h. dass bei der Übermittlung der Bestätigungsnachricht über den Kommunikationspfad keine Manipulation durch ein weiteres Kommunikationsendgerät stattgefunden hat.

In einer weiteren besonders bevorzugten Ausführungsform ist das erfindungsgemäße Verfahren derart ausgeprägt, dass das weitere Kommunikationsendgerät oder jedes der weiteren Kommunikationsendgeräte der Bestätigungsnachricht das jeweilige von ihm zuvor erzeugte Zusatz-Kosten-Signal hinzufügt. Dies bietet den Vorteil, dass dem Kommunikationssystem somit von jedem der weiteren Kommunikationsendgeräte das betreffende Zusatzkosten-Signal, d.h. die von dem jeweiligen weiteren Kommunikationsendgerät für seinen Anteil an der Bereitstellung der Kommunikationsverbindung erhobene Forderung, bestätigt wird.

In einer weiteren bevorzugten Weiterbildung läuft das erfindungsgemäße Verfahren so ab, dass das weitere Kommunikationsendgerät oder jedes der weiteren Kommunikationsendgeräte das jeweilige Zusatz-Kosten-Signal vor dem Hinzufügen derart verschlüsselt, dass eine Lesbarkeit ausschließlich für das Kommunikationssystem gegeben ist. Eine entsprechende Verschlüsselung ist wiederum vorteilhaft, da hierdurch das Lesen des jeweiligen Zusatzkosten-Signals durch ein anderes der weiteren Kommunikationsendgeräte verhindert wird.

Vorzugsweise ist das erfindungsgemäße Verfahren so ausgestaltet, dass das weitere Kommunikationsendgerät oder jedes der weiteren Kommunikationsendgeräte das jeweilige von ihm hinzugefügte Zusatz-Kosten-Signal elektronisch signiert. Dies bietet den Vorteil, dass dem Kommunikationssystem beziehungsweise dem Netzbetreiber des Kommunikationssystems die jeweiligen Zusatzkosten-Signale in verifizierter Form zur Verfügung gestellt werden.

In einer weiteren bevorzugten Ausführungsform läuft das erfindungsgemäße Verfahren so ab, dass das Kommunikationsendgerät durch das Senden einer Quittierungsnachricht über den Kommunikationspfad an das Kommunikationssystem in vorbestimmten Intervallen das Bereitstellen der Kommunikationsverbindung durch das weitere Kommunikationsendgerät oder die weiteren Kommunikationsendgeräte bestätigt. Hierdurch wird es vorteilhafterweise ermöglicht, dass unabhängig vom jeweils gewählten Vergebührungsmechanismus und der jeweiligen Zahlungsweise eine Freigabe der betreffenden Forderung eines weiteren Kommunikationsendgerätes, d.h. die Bezahlung des "Teilstreckenaufschlags" an das jeweilige weitere Kommunikationsendgerät beziehungsweise dessen Nutzer, erst dann erfolgt, wenn das die Kommunikationsverbindung nutzende Kommunikationsendgerät die Erbringung der Weiterleitung, d.h. die Bereitstellung der Kommunikationsverbindung, bestätigt hat. Eine entsprechende Bestätigungsnachricht wird vorzugsweise in definierbaren Zeit- beziehungsweise Diensteinheitsschritten (z.B. alle 10 Minuten oder alle 500 kByte) durch das Kommunikationsendgerät erzeugt.

Vorzugsweise läuft das erfindungsgemäße Verfahren so ab, dass das Kommunikationsendgerät die Quittierungsnachricht elektronisch signiert. Um zu Verhindern, dass die weiteren Kommunikationsendgeräte zuviel abrechnen oder umgekehrt das Kommunikationsendgerät durch das weitere Kommunikationsendgerät oder die weiteren Kommunikationsendgeräte erbrachte Datenübertragungen abstreitet, werden die Bestätigungsnachrichten vorteilhafterweise durch das Kommunikationsendgerät elektronisch signiert, aber im Klartext, d.h. unverschlüsselt, entlang des Kommunikationspfades an das Kommunikationssystem geschickt, so dass die weiteren Kommunikationsendgeräte die korrekte Bestätigung ihres Aufwandes, d.h. ihres Anteils an der Bereitstellung der Kommunikationsverbindung, überprüfen können.

Vorzugsweise läuft das erfindungsgemäße Verfahren so ab, dass das Kommunikationssystem die Quittierungsnachricht durch das Senden einer Empfangsbestätigung über den Kommunikationspfad an das Kommunikationsendgerät beantwortet. Dies bietet den Vorteil, dass insbesondere die weiteren Kommunikationsendgeräte eine Information darüber erhalten, dass die Bestätigungsnachricht das Kommunikationssystem erreicht hat.

In einer bevorzugten Ausführungsform des erfindungsgemäßen Verfahrens signiert das Kommunikationssystem die Empfangsbestätigung elektronisch, wodurch vorteilhafterweise ihre Authentizität bestätigt bzw. sichergestellt wird.

In einer weiteren bevorzugten Ausführungsform läuft das erfindungsgemäße Verfahren so ab, dass das Kommunikationssystem der Empfangsbestätigung ein Gebühren-Signal bezüglich der bis zu diesem Zeitpunkt für die Kommunikationsverbindung angefallenen Gebühren hinzufügt. Hierdurch wird die Kostentransparenz für das Kommunikationsendgerät beziehungsweise dessen Nutzer vorteilhafterweise weiter erhöht.

Das erfindungsgemäße Verfahren kann weiterhin auch so ablaufen, dass das Kommunikationssystem das Gebühren-Signal derart verschlüsselt, dass eine Lesbarkeit ausschließlich für das Kommunikationsendgerät gegeben ist. Dies bietet wiederum den Vorteil, dass das Gebühren-Signal für die weiteren Kommunikationsendgeräte nicht lesbar ist.

Zur weiteren Erläuterung der Erfindung zeigt
- Figur 1: in einer schematischen Darstellung eine Anordnung zur Erläuterung eines Ausführungsbeispiels des erfindungsgemäßen Verfahrens und
- Figur 2: in schematischer Darstellung die beim Ablauf eines Ausführungsbeispiels des erfindungsgemäßen Verfahrens zwischen den beteiligten Komponenten ausgetauschten Nachrichten.

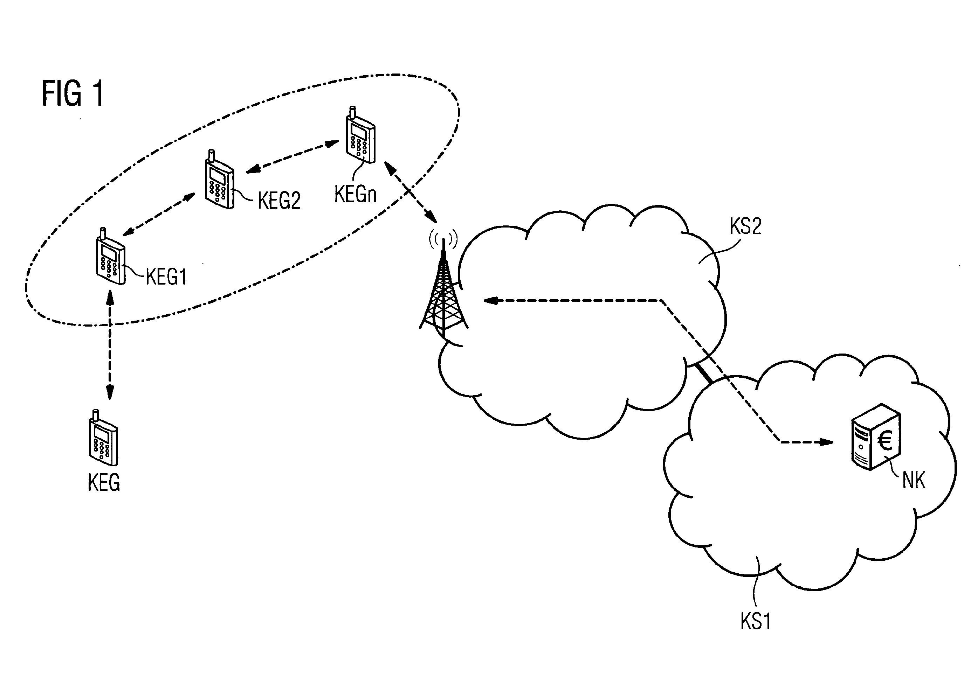

Figur 1 zeigt in einer schematischen Darstellung eine Anordnung zur Erläuterung eines Ausführungsbeispiels des erfindungsgemäßen Verfahrens. Dabei ist ein Kommunikationsendgerät KEG gezeigt, das eine Kommunikationsverbindung zu einem Kommunikationssystem KS1 bzw. dem Netzknoten NK des Kommunikationssystems KS1 aufbauen möchte.

Bei dem Kommunikationssystem KS1 sowie einem dargestellten weiteren Kommunikationssystem KS2 handelt es sich im Rahmen des beschriebenen Ausführungsbeispiels um Mobilfunknetze gemäß dem GPRS (General Packet Radio Service)-Standard. Alternativ hierzu könnte es sich bei den dargestellten Kommunikationssystemen KS1 und KS2 auch um Kommunikationssysteme beliebiger anderer gleicher oder unterschiedlicher Art handeln.

Bei dem Kommunikationssystem KS1 handelt es sich um das so genannte Heimatnetz des Kommunikationsendgerätes KEG, d.h. zwischen dem Nutzer des Kommunikationsendgerätes KEG und dem Betreiber des Kommunikationssystems KS1 besteht üblicherweise eine vertragliche Beziehung. In dem dargestellten Ausführungsbeispiel befindet sich das Kommunikationsendgerät KEG nicht in einem lokalen Bereich, der durch das Kommunikationssystem KS1 abgedeckt wird. Darüber hinaus deckt auch das weitere Kommunikationssystem KS2, in der Nähe dessen Abdeckungsbereichs sich das Kommunikationsendgerät KEG aufhält, den Aufenthaltsort des Kommunikationsendgerätes KEG hinsichtlich seiner Netzabdeckung nicht ab. Allerdings besteht zwischen den Betreibern des Kommunikationssystems KS1 und des weiteren Kommunikationssystems KS2 eine so genannte "Roaming"-Vereinbarung, so dass das Kommunikationsendgerät KEG grundsätzlich, d.h. sofern es sich in dem Bereich der Netzabdeckung befinden würde, über das weitere Kommunikationssystem KS2 eine Kommunikationsverbindung in das Kommunikationssystem KS1 aufbauen könnte.

Die Bereitstellung einer Kommunikationsverbindung zwischen dem Kommunikationsendgerät KEG und dem Kommunikationssystem KS1 kann in der beschriebenen Situation nun jedoch über drei weitere Kommunikationsendgeräte KEG1, KEG2, KEGn erfolgen. Diese ermöglichen es, dass ein Kommunikationspfad zwischen dem Kommunikationsendgerät und dem weiteren Kommunikationssystem KS2 und weiter zu dem Kommunikationssystem KS1 über diese weiteren Kommunikationsendgeräte KEG1, KEG2, KEGn bereitgestellt werden kann. Der Kommunikationspfad wird dabei allgemein über zumindest ein weiteres Kommunikationsendgerät KEG1, KEG2, KEGn bereitgestellt, wobei die maximale Anzahl der beteiligten weiteren Kommunikationsendgeräte KEG1, KEG2, KEGn nicht nach oben beschränkt ist. Im Einzelfall ist die Anzahl der beteiligten weiteren Kommunikationsendgeräte KEG1, KEG2, KEGn insbesondere von der jeweiligen konkreten Situation und dem für das Routing verwendeten Verfahren bzw. Protokoll abhängig.

Es sei darauf hingewiesen, dass selbstverständlich auch eine unmittelbare Verbindung zwischen dem Kommunikationsendgerät KEGn und dem Kommunikationssystem KS1 beziehungsweise dessen Netzknoten NK bestehen könnte, d.h. die Zwischenschaltung des weiteren Kommunikationssystems KS2 ist nicht zwingend erforderlich. Darüber hinaus sei angemerkt, dass es sich bei dem Netzknoten NK generell um einen beliebigen Netzknoten des Kommunikationssystems KS1 handeln kann. Dies bedeutet insbesondere für den Fall, dass es sich bei Kommunikationssystem KS1 um ein Mobilfunknetz handelt, dass der Netzknoten NK sowohl im so genannten Radio- oder Funknetz als auch im so genannten Kernnetz des Mobilfunknetzes angeordnet sein kann.

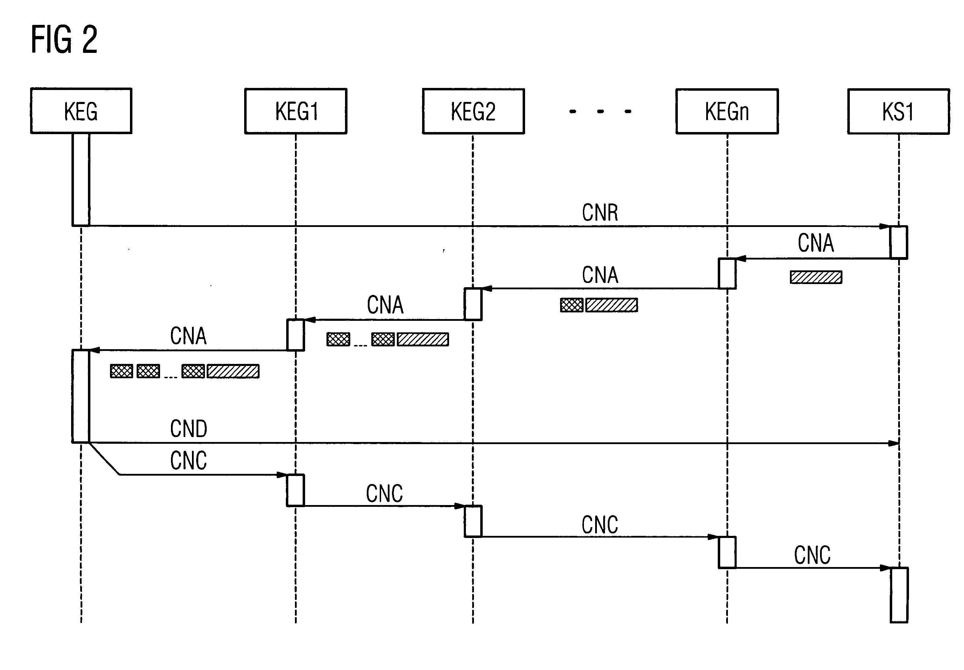

Die Figur 2 zeigt in schematischer Darstellung die beim Ablauf eines Ausführungsbeispiels des erfindungsgemäßen Verfahrens zwischen einem Kommunikationsendgerät KEG sowie weiteren Kommunikationsendgeräten KEG1, KEG2, KEGn und einem Kommunikationssystem KS1 ausgetauschten Nachrichten. Dabei sind die beteiligten Komponenten KEG, KEG1, KEG2, KEGn und KS1 jeweils durch eine entsprechend bezeichnete vertikale Linie angedeutet, während die zwischen den Komponenten KEG, KEG1, KEG2, KEGn und KS1 ausgetauschten Nachrichten durch die horizontalen Pfeile dargestellt sind. In dem Ausführungsbeispiel der Figur 2 sei angenommen, dass das weitere Kommunikationsendgerät KEGn unmittelbar mit dem Kommunikationssystem KS1 verbunden ist, d.h. im Unterschied zur Darstellung der Figur 1 ohne Zwischenschaltung eines weiteren Kommunikationssystems.

In dem Ausführungsbeispiel gemäß Figur 2 soll eine Kommunikationsverbindung zwischen dem Kommunikationsendgerät KEG und dem Kommunikationssystem KS1 über einen Kommunikationspfad bereitgestellt werden. Wie in Figur 2 angedeutet, verläuft der Kommunikationspfad dabei über n weitere Kommunikationsendgeräte KEG1, KEG2, KEGn, wobei aus Gründen der Übersichtlichkeit wiederum lediglich drei weitere Kommunikationsendgeräte KEG1, KEG2, KEGn explizit dargestellt sind.

In dem Ausführungsbeispiel der Figur 2 läuft das erfindungsgemäße Verfahren nun so ab, dass das Kommunikationsendgerät KEG eine Verbindungsanfrage CNR über die weiteren Kommunikationsendgeräte KEG1, KEG2, KEGn an das Kommunikationssystem KS1 sendet. Dabei kann der betreffende Kommunikationspfad entweder zuvor bereits ermittelt worden sein oder auch erst während der Übertragung der Verbindungsanfrage ermittelt werden. Die Ermittlung des Kommunikationspfades erfolgt dabei unter Verwendung eines beliebigen für sich bekannten Verfahrens. Es sei nachdrücklich darauf hingewiesen, dass die Verbindungsanfrage CNR in der Figur 2 zwar als durchgehende Linie dargestellt ist, diese Nachricht aber selbstverständlich dennoch über den Kommunikationspfad, d.h. über die weiteren Kommunikationsendgeräte KEG1, KEG2, KEGn, an das Kommunikationssystem KS1 übertragen wird. Die Verwendung einer durchgehenden Linie soll hier lediglich andeuten, dass die weiteren Kommunikationsendgeräte KEG1, KEG2, KEGn die Verbindungsanfrage CNR ohne Bearbeitung oder Veränderung weiterleiten.

Nach Empfang der Verbindungsanfrage CNR erzeugt das Kommunikationssystem KS1 ein Kosten-Signal bezüglich der seitens des Netzbetreibers des Kommunikationssystems KS1 für das Bereitstellen der Kommunikationsverbindung mit dem Kommunikationsendgerät KEG anfallenden Gebühren und beantwortet die Verbindungsanfrage CNR durch das Senden einer das Kosten-Signal enthaltenen Antwortnachricht CNA über den Kommunikationspfad an das Kommunikationsendgerät KEG. Dabei ist in Figur 2 das Kosten-Signal beziehungsweise die entsprechende Gebühr durch das schraffierte Rechteck angedeutet, dass unterhalb der Antwortnachricht CNA dargestellt ist. Vorzugsweise enthält das Kosten-Signal eine Angabe zu allen netzseitig anfallenden Gebühren, d.h. inklusive möglicher Roaming-Gebühren und Aufschläge aufgrund einer möglichen Bereitstellung der Kommunikationsverbindung über ein weiteres Kommunikationssystem.

Dies bedeutet, dass das Kosten-Signal eine Angabe zu den Gebühren beinhaltet, die das Kommunikationsendgerät KEG bezahlen müsste, wenn es entsprechend dem in der Weiterleitungskette letzten weiteren Kommunikationsendgerät KEGn unmittelbar mit dem Kommunikationssystem KS1 verbunden wäre. Darüber hinaus werden vorzugsweise auch mögliche zusätzliche Aufschläge berücksichtigt, die der Netzbetreiber des Kommunikationssystems KS1 oder die Netzbetreiber eventuell zwischengeschalteter weiterer Kommunikationssysteme für das Bereitstellen einer Kommunikationsverbindung über zumindest ein weiteres Kommunikationsendgerät KEG1, KEG2, KEGn berechnen.

Jedes der weiteren Kommunikationsendgeräte KEG1, KEG2, KEGn liegt auf dem Kommunikationspfad und erhält somit die Antwortnachricht CNA. Dabei ist das Kosten-Signal des Kommunikationssystems KS1 für die weiteren Kommunikationsendgeräte KEG1, KEG2, KEGn jedoch nicht lesbar, da es mit dem öffentlichen Schlüssel des Kommunikationsendgerätes KEG verschlüsselt ist.

Jedes der weiteren Kommunikationsendgeräte KEG1, KEG2, KEGn fügt der Antwortnachricht CNA nun seine Forderung für den Aufwand für den im Rahmen der Kommunikationsverbindung bereitgestellten Weiterleitungsdienst in Form eines Zusatz-Kosten-Signals hinzu. Diese Forderung wird beim Anhängen an die Antwortnachricht CNA ebenfalls mit dem öffentlichen Schlüssel des Kommunikationsendgerätes KEG beziehungsweise seines Nutzers verschlüsselt, so dass die Forderung nicht für die jeweils anderen weiteren Kommunikationsendgeräte KEG1, KEG2, KEGn lesbar ist. Dabei kann die Forderung auch in Form eines mathematischen Ausdrucks angefügt werden, um Angriffe auf die Verschlüsselung zu erschweren. In Figur 2 sind die Zusatzkosten-Signale beziehungsweise die entsprechenden Gebühren jeweils durch die kleineren, schachbrettartig gemusterten Rechtecke angedeutet.

Trifft die Antwortnachricht CNA beim Kommunikationsendgerät KEG des Nutzers der Netzabdeckungserweiterung ein, so entschlüsselt das Kommunikationsendgerät KEG alle Forderungen der beteiligten weiteren Kommunikationsendgeräte KEG1, KEG2, KEGn, d.h. die Zusatz-Kosten-Signale, sowie die von Seiten des Kommunikationssystems KS1 geforderten Gebühren, d.h. das Kosten-Signal, und errechnet daraus die Gesamtkosten für die Bereitstellung der Kommunikationsverbindung. Diese setzen sich somit aus der Gebühr des Betreibers des Kommunikationssystems KS1 und den von den weiteren Kommunikationsendgeräten KEG1, KEG2, KEGn geforderten Aufschlägen für alle durch die weiteren Kommunikationsendgeräte KEG1, KG2, KEGn bereitgestellten Teilstrecken des Kommunikationspfades zusammen.

Auf Grundlage dieses Gesamtpreises entscheidet das Kommunikationsendgerät KEG nun, ob die Kommunikationsverbindung genutzt werden soll oder nicht, d.h. ob eine dauerhafte Bereitstellung der Kommunikationsverbindung erfolgen soll oder nicht. Diese Entscheidung kann dabei sowohl manuell durch einen Nutzer des Kommunikationsendgerätes KEG als auch automatisch, beispielsweise anhand vordefinierter, etwa auf dem Kommunikationsendgerät KEG gespeicherter Regeln, erfolgen.

Wird gegen eine Nutzung der Kommunikationsverbindung entschieden, so sendet das Kommunikationsendgerät KEG eine durch eine elektronische Signatur gegen Manipulation gesicherte Beendigungsnachricht CND an das Kommunikationssystem KS1. Dabei ist die Beendigungsnachricht CND in Figur 2 ebenso wie die Verbindungsanfrage CNR als durchgehende Linie dargestellt. Hierdurch soll wiederum angedeutet werden, dass die betreffende Nachricht durch die weiteren Kommunikationsendgeräte KEG1, KEG2, KEGn lediglich weitergeleitet, nicht jedoch verarbeitet oder geändert wird. Durch das Senden der Beendigungsnachricht CND wird die Kommunikationsverbindung abgebaut beziehungsweise nicht dauerhaft bereitgestellt.

Soll die Verbindung genutzt werden, so wird von dem Kommunikationsendgerät KEG hingegen eine Bestätigungsnachricht CNC an das Kommunikationssystem KS1 gesendet. Um Betrugsversuchen vorzubeugen, werden der Bestätigungsnachricht CNC durch das Kommunikationsendgerät KEG alle Teilstreckenaufschläge, d.h. alle Zusatz-Kosten-Signale mit den Forderungen der weiteren Kommunikationsendgeräte KEG1, KEG2, KEGn, hinzugefügt. Die entsprechende Information wird dabei vorzugsweise mit einem dem Kommunikationssystem KS1 zugeordneten öffentlichen Schlüssel verschlüsselt sowie mit einem dem Kommunikationsendgerät KEG zugeordneten privaten Schlüssel elektronisch signiert.

Die einzelnen weiteren Kommunikationsendgeräte KEG1, KEG2, KEGn fügen der Bestätigungsnachricht CNC vor der Weiterleitung ebenfalls verschlüsselt und elektronisch signiert das jeweilige Zusatz-Kosten-Signal mit der Angabe zu den Gebühren, die das jeweilige weitere Kommunikationsendgerät KEG1, KEG2, KEGn für seinen Anteil an der Bereitstellung der Kommunikationsverbindung gefordert hat, hinzu. Dabei erfolgt die Verschlüsselung mit dem dem Kommunikationssystem KS1 zugeordneten öffentlichen Schlüssel und die elektronische Signatur jeweils mit einem dem jeweiligen weiteren Kommunikationsendgerät KEG1, KEG2, KEGn zugeordneten privaten Schlüssel. Dies bietet den Vorteil, dass dem Kommunikationssystem KS1 alle Sichten, d.h. die jeweils angebotenen bzw. akzeptierten Gebühren, in verifizierbarer Form zur Verfügung stehen. Eventuelle Manipulationen während des Übermittelns der Nachrichten können somit ausgeschlossen werden.

Sofern ein Verfahren zur Echtzeitvergebührung, d.h. ein Online-Charging-Mechanismus zum Einsatz kommt, so können den weiteren Kommunikationsendgeräten KEG1, KEG2, KEGn entsprechende Quoten bzw. Guthaben zur Verfügung gestellt werden, die in diesem Fall garantierte Forderungen im Sinne eines gedeckten Kontos darstellen. In diesem Fall kann das Kommunikationssystem KS1 alle beteiligten weiteren Kommunikationsendgeräte KEG1, KEG2, KEGn auffordern, entsprechende Quoten anzufordern. Dies erfolgt gemäß im Rahmen einer Echtzeitvergebührung allgemein bekannter Verfahren.

Unabhängig von dem gewählten Vergebührungsmechanismus (Online, Offline) und der verwendeten Zahlungsweise (Prepaid, Postpaid) erfolgt die Freigabe der Forderung, d.h. die Bezahlung des Teilstreckenaufschlags an das jeweilige weitere Kommunikationsendgerät KEG1, KEG2, KEGn vorzugsweise aber erst, wenn das Kommunikationsendgerät KEG durch das Senden einer in Figur 2 nicht dargestellten Quittierungsnachricht über den Kommunikationspfad an das Kommunikationssystem KS1 das Bereitstellen der Kommunikationsverbindung durch die weiteren Kommunikationsendgeräte KEG1, KEG2, KEGn bestätigt hat. Dies erfolgt vorzugsweise in definierbaren Zeit- beziehungsweise Diensteinheitsschritten, d.h. beispielsweise jeweils nach erfolgter Übertragung einer vorbestimmten Datenmenge von beispielsweise 500 kByte.

Um zu verhindern, dass die weiteren Kommunikationsendgeräte KEG1, KEG2, KEGn versuchen, einen zu hohen Gebührenbetrag gegenüber dem Kommunikationssystem KS1 abzurechnen, oder das Kommunikationsendgerät KEG von den weiteren Kommunikationsendgeräten KEG1, KEG2, KEGn erbrachte Weiterleitungsdienstleistungen abstreitet, werden die Quittierungsnachrichten durch das Kommunikationsendgerät KEG unverschlüsselt aber elektronisch signiert entlang des Kommunikationspfades zu dem Kommunikationssystem KS1 geschickt. Dies bietet den Vorteil, dass die weiteren Kommunikationsendgeräte KEG1, KEG2, KEGn die korrekte Bestätigung ihres Aufwandes überprüfen können.

Das Kommunikationssystem KS1 beantwortet die Quittierungsnachricht durch das Senden einer ebenfalls in Figur 2 aus Gründen der Übersichtlichkeit nicht dargestellten Empfangsbestätigung über den Kommunikationspfad an das Kommunikationsendgerät KEG. Hierdurch wird für die weiteren Kommunikationsendgeräte KEG1, KEG2, KEGn sichergestellt, dass die Quittierungsnachricht das Kommunikationssystem KS1 auch tatsächlich erreicht hat. Vorzugsweise erfolgt dabei wiederum eine elektronische Signierung der Empfangsbestätigung durch das Kommunikationssystem KS1, wodurch die Authentizität der Nachricht belegt wird.

Die Empfangsbestätigung kann zusätzlich ein durch das Kommunikationssystem KS1 hinzugefügtes Gebühren-Signal bezüglich der bis zum jeweiligen Zeitpunkt für die Kommunikationsverbindung insgesamt angefallenen Gebühren beinhalten. Diese Information ist vorzugsweise wiederum derart verschlüsselt, dass sie für die weiteren Kommunikationsendgeräte KEG1, KEG2, KEGn beziehungsweise deren Nutzer nicht lesbar ist.

Das beschriebene Ausführungsbeispiel des erfindungsgemäßen Verfahrens bietet generell insbesondere den Vorteil, dass eine Vergebührung der Bereitstellung einer Kommunikationsverbindung zwischen einem Kommunikationsendgerät KEG und einem Kommunikationssystem KS1 über einen Kommunikationspfad, der über zumindest ein weiteres Kommunikationsendgerät KEG1, KEG2, KEGn verläuft, auf effiziente und einfache Art und Weise ermöglicht wird. Darüber hinaus wird eine solche Bereitstellung einer Kommunikationsverbindung durch das beschriebene Verfahren für den Netzbetreiber des Kommunikationssystems wirtschaftlich interessant. Dabei wird dem Netzbetreiber sowohl des Heimatnetzes des Kommunikationsendgerätes KEG, d.h. beispielsweise des Kommunikationssystems KS1, als auch eines von dem Kommunikationsendgerät KEG besuchten Kommunikationsnetzes, d.h. beispielsweise des Kommunikationssystems KS2, die Möglichkeit geboten, ihre Dienste einem erweiterten Nutzerkreis zur Verfügung zu stellen. Aufgrund des beschriebenen Mechanismus zur Entlohnung für den geleisteten Aufwand besteht darüber hinaus auch seitens der weiteren Kommunikationsendgeräte KEG1, KEG2, KEGn ein Anreiz dafür, sich an der Bereitstellung der Kommunikationsverbindung zu beteiligen, d.h. eine Weiterleitung von zwischen dem Kommunikationsendgerät KEG und dem Kommunikationssystem KS1 übermittelten Daten vorzunehmen.

## Patentansprüche

1. Verfahren zum Bereitstellen einer Kommunikationsverbindung zwischen einem Kommunikationsendgerät (KEG) und einem Kommunikationssystems (KS1) über einen Kommunikationspfad, der über zumindest ein weiteres Kommunikationsendgerät (KEG1, KEG2, KEGn) verläuft, mit den folgenden Schritten:
- Senden einer Verbindungsanfrage (CNR) über den Kommunikationspfad an das Kommunikationssystem (KS1) durch das Kommunikationsendgerät (KEG),
- Erzeugen eines Kosten-Signals bezüglich der seitens des Netzbetreibers des Kommunikationssystems (KS1) für das Bereitstellen der Kommunikationsverbindung mit dem Kommunikationsendgerät (KEG) anfallenden Gebühren und Beantworten der Verbindungsanfrage (CNR) durch Senden einer das Kosten-Signal enthaltenden Antwortnachricht (CNA) über den Kommunikationspfad an das Kommunikationsendgerät (KEG) durch das Kommunikationssystem (KS1),
- Erzeugen eines Zusatz-Kosten-Signals und Hinzufügen des Zusatz-Kosten-Signals zu der Antwortnachricht (CNA) durch das weitere Kommunikationsendgerät oder jeweils durch die weiteren Kommunikationsendgeräte (KEG1, KEG2, KEGn) auf dem Kommunikationspfad, wobei das Zusatz-Kosten-Signal eine Angabe zu den Gebühren enthält, die das jeweilige Kommunikationsendgerät (KEG1, KEG2, KEGn) für seinen Anteil an der Bereitstellung der Kommunikationsverbindung fordert, und
- Empfangen der Antwortnachricht (CNA) sowie Senden einer Bestätigungsnachricht (CNC) an das Kommunikationssystem (KS1) über den Kommunikationspfad durch das Kommunikationsendgerät (KEG), sofern die sich aus dem Kosten-Signal sowie dem zumindest einen Zusatz-Kasten-Signal ergebenden Gesamtgebühren seitens des Kommunikationsendgerätes (KEG) akzeptiert werden, woraufhin die Kommunikationsverbindung zwischen dem Kommunikationsendgerät (KEG) und dem Kommunikationssystem (KS1) über den Kommunikationspfad bereitgestellt wird.

2. Verfahren nach Anspruch 1,
**dadurch gekennzeichnet, dass**
das Kosten-Signal und/oder das jeweilige Zusatz-Kosten-Signal durch das Kommunikationssystem (KS1) beziehungsweise das jeweilige weitere Kommunikationsendgerät (KEG1, KEG2, KEGn) derart verschlüsselt wird bzw. werden, dass das jeweilige Signal ausschließlich für das Kommunikationsendgerät (KEG) lesbar ist.

3. Verfahren nach Anspruch 2,
**dadurch gekennzeichnet, dass**
das Kosten-Signal und/oder das jeweilige Zusatz-Kosten-Signal der Antwortnachricht (CNA) in Form eines die jeweilige Gebühr beschreibenden mathematischen Ausdruckes hinzugefügt wird bzw. werden.

4. Verfahren nach einem der vorangehenden Ansprüche,
**dadurch gekennzeichnet, dass**
das Kommunikationsendgerät (KEG) das mit der Antwortnachricht (CNA) empfangene Zusatz-Kosten-Signal oder die mit der Antwortnachricht (CNA) empfangenen Zusatz-Kosten-Signale der Bestätigungsnachricht (CNC) hinzufügt.

5. Verfahren nach Anspruch 4,
**dadurch gekennzeichnet, dass**
das Kommunikationsendgerät (KEG) das Zusatz-Kosten-Signal oder die Zusatz-Kosten-Signale vor dem Hinzufügen derart verschlüsselt, dass eine Lesbarkeit ausschließlich für das Kommunikationssystem (KS1) gegeben ist.

6. Verfahren nach einem der Ansprüche 4 oder 5,
**dadurch gekennzeichnet, dass**
das Kommunikationsendgerät (KEG) das von ihm der Bestätigungsnachricht (CNC) hinzugefügte Zusatz-Kosten-Signal oder die von ihm der Bestätigungsnachricht (CNC) hinzugefügten Zusatz-Kosten-Signale elektronisch signiert.

7. Verfahren nach einem der vorangehenden Ansprüche,
**dadurch gekennzeichnet, dass**
das weitere Kommunikationsendgerät oder jedes der weiteren Kommunikationsendgeräte (KEG1, KEG2, KEGn) der Bestätigungsnachricht (CNC) das jeweilige von ihm zuvor erzeugte Zusatz-Kosten-Signal hinzufügt.

8. Verfahren nach Anspruch 7,
**dadurch gekennzeichnet, dass**
das weitere Kommunikationsendgerät oder jedes der weiteren Kommunikationsendgeräte (KEG1, KEG2, KEGn) das jeweilige Zusatz-Kosten-Signal vor dem Hinzufügen derart verschlüsselt, dass eine Lesbarkeit ausschließlich für das Kommunikationssystem (KS1) gegeben ist.

9. Verfahren nach Anspruch 7 oder 8,
**dadurch gekennzeichnet, dass**
das weitere Kommunikationsendgerät oder jedes der weiteren Kommunikationsendgeräte (KEG1, KEG2, KEGn) das jeweilige von ihm hinzugefügte Zusatz-Kosten-Signal elektronisch signiert.

10. Verfahren nach einem der vorangehenden Ansprüche,
**dadurch gekennzeichnet, dass**
das Kommunikationsendgerät (KEG) durch das Senden einer Quittierungsnachricht über den Kommunikationspfad an das Kommunikationssystem (KS1) in vorbestimmten Intervallen das Bereitstellen der Kommunikationsverbindung durch das weitere Kommunikationsendgerät oder die weiteren Kommunikationsendgeräte (KEG1, KEG2, KEGn) bestätigt.

11. Verfahren nach Anspruch 10,
**dadurch gekennzeichnet, dass**
das Kommunikationsendgerät (KEG) die Quittierungsnachricht elektronisch signiert.

12. Verfahren nach Anspruch 10 oder 11,
**dadurch gekennzeichnet, dass**
das Kommunikationssystem (KS1) die Quittierungsnachricht durch das Senden einer Empfangsbestätigung über den Kommunikationspfad an das Kommunikationsendgerät (KEG) beantwortet.

13. Verfahren nach Anspruch 12,
**dadurch gekennzeichnet, dass**
das Kommunikationssystem (KS1) die Empfangsbestätigung elektronisch signiert.

14. Verfahren nach Anspruch 12 oder 13,
**dadurch gekennzeichnet, dass**
das Kommunikationssystem (KS1) der Empfangsbestätigung ein Gebühren-Signal bezüglich der bis zu dem betreffenden Zeitpunkt für die Kommunikationsverbindung angefallenen Gebühren hinzufügt.

15. Verfahren nach Anspruch 14,
**dadurch gekennzeichnet, dass**
das Kommunikationssystem (KS1) das Gebühren-Signal derart verschlüsselt, dass eine Lesbarkeit ausschließlich für das Kommunikationsendgerät (KEG) gegeben ist.
